# FASCICULE DE BREVET EUROPEEN

(11) **EP 1 398 557 B1**
(45) Date de publication et mention de la délivrance du brevet: **26.04.2006**
(21) Numéro de dépôt: 03292253.6
(22) Date de dépôt: 12.09.2003
(51) Int. Cl.: F16L 33/24

(54) **Procédé de fabrication d'un dispositif de raccordement de tubes ou tuyaux sur un embout et dipositif de raccordement obtenu**
Herstellungsverfahren einer Vorrichtung zum Verbinden von Rohren mit einem Rohrende und damit hergestellte Verbindung
Manufacturing process for a device for connection tubes or pipes to a pipe end and connection so obtained

(30) Priorité: 12.09.2002 FR 0211297
(43) Date de publication de la demande: 17.03.2004
(73) Titulaire: Trelleborg Fluid & Acoustic Solutions (TFAS), 44470 Carquefou (FR)
(72) Inventeur: Merour, Sylvain, 44120 Vertou (FR)
(74) Mandataire: Fosse, Danièle

(56) Documents cités:
- FR-A- 2 755 494
- US-A- 5 411 300
- US-B1- 6 315 331

## Description

L'invention concerne un dispositif de raccordement de tubes ou tuyaux sur un embout et son procédé de réalisation. Les dispositifs de raccordement de tubes ou tuyaux sur un embout sont généralement utilisés pour l'assemblage de tuyaux véhiculant toutes sortes de fluides pour moteur à combustion interne de véhicules automobiles ou pour toute autre application nécessitant une liaison de tubes ou tuyaux. Il est donc particulièrement important de prévenir tout risque de fuite lors de ce raccordement.

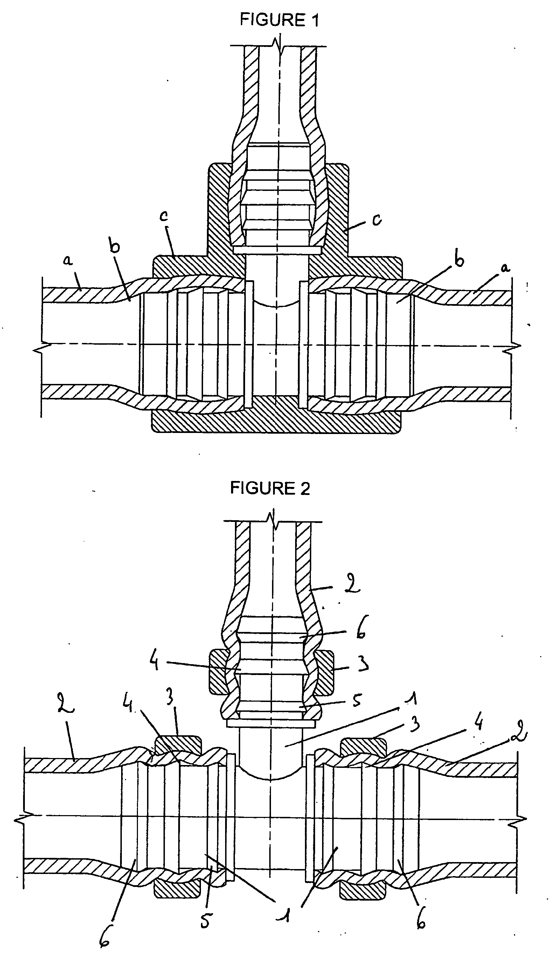

On connaît par WO-A-0077440, un procédé de raccordement de tubes ou tuyaux (a) sur un embout (b) dans lequel on propose de réaliser le moulage d'une matière plastique (c) au moins au droit des zones dans lesquelles les tuyaux coopèrent avec l'embout. Lors du moulage, la matière plastique moulée (c) sert à fixer le tuyau (a) sur l'embout (b) lors de son retrait en appliquant un effort de compression sur le tuyau (a). Cette matière plastique (c) est en contact à la fois avec l'embout (b) et avec le tuyau (a) comme cela est visible dans la figure 1.

Il en résulte que, lors de variation de température, de pression et du fait que les matériaux du tuyau a et de l'embout b sont différents, les matériaux se déforment de manière différente d'un matériau à un autre, ce qui entraîne un risque de création de fuites.

De plus, le surmoulage de l'embout augmente inutilement le temps de cycle d'injection et la quantité de matière plastique injectée

Par ailleurs, plusieurs documents de l'état de la technique ont montré que pour obtenir une liaison parfaitement étanche entre un embout muni de relief(s) annulaire(s) et un tuyau élastiquement déformable emmanché sur l'embout, il fallait déformer le tuyau pour amener certaines de ses parties au contact de l'embout.

Ainsi, le brevet FR-A-2.755.494 propose, pour provoquer une déformation au moins élastique d'une portion annulaire du tuyau, pour le contraindre à pénétrer dans au moins un creux annulaire de l'embout, à appliquer sous pression une matière fluide et solidifiable autour de la portion de tuyau. C'est donc la matière d'injection qui provoque la déformation du tuyau comme le confirment les figures du document où la figure 1 montre, qu'en position fermée du moule, avant injection, le tuyau n'est pas déformé. Cette solution est une solution complexe à mettre en oeuvre car sensible à un grand nombre de paramètres (température, résistance des matériaux) et nécessite d'une part des pressions d'injection élevées, d'autre part, des quantités de matières d'injection importantes. En tout état de cause, cette solution se caractérise par le fait que le tuyau est déformé pendant l'injection de matière et non avant l'injection de matière de telle sorte que la déformation est difficilement maîtrisable.

Le brevet US-A-5.411.300 décrit quant à lui une solution dans laquelle l'amélioration de l'étanchéité repose sur deux paramètres, à savoir d'une part l'élasticité du tuyau venant à recouvrement de l'embout, d'autre part, le coefficient de retrait du couvercle ou bague surmoulée. En effet, le tuyau est choisi pour permettre une augmentation de son diamètre de 20 à 30 % lors de son emmanchement sur l'embout, ce qui a pour conséquence d'assurer ensuite une bonne étanchéité entre embout et tuyau. A l'inverse, il est parfois difficile d'emmancher un tel tuyau sur l'embout. Parallèlement, le retrait de la pièce surmoulée, choisi pour empêcher l'apparition de criques de tension, favorise l'amenée en pression de contact du tuyau, de la bague et de l'embout. En conséquence, l'étanchéité est essentiellement obtenue par le retrait de la matière surmoulée. Le fait que le tuyau puisse ne pas pénétrer dans les creux entre deux reliefs annulaires de l'embout n'est pas abordé ou apparaît comme a priori réglé par l'élasticité du tuyau.

Dans un mode de réalisation particulier, on décrit toutefois une solution dans laquelle on comprime des portions de tuyau avant injection de matière puis on assure un blocage axial de la bague surmoulée grâce au fait que la matière comprimée par des anneaux d'étanchéité faisant partie du moule s'expanse et forme des renflements de part et d'autre de la bague comme l'illustre la figure 11. Cette réalisation est donc destinée à renforcer l'immobilisation axiale de la bague sur le tuyau et non à permettre au tuyau de mieux adhérer à la surface de l'embout. Cette solution repose donc sur un écrasement de la matière constitutive du tuyau pour permettre à cette dernière, une fois le surmoulage effectué de s'expanser de part et d'autre de la bague et constituer ainsi des butées axiales. La solution décrite nécessite donc une déformation du tuyau, un surmoulage puis une expansion du tuyau de part et d'autre de la partie surmoulée. A aucun moment, le problème du comblement des espaces vides entre surface interne de tuyau et surface externe de l'embout n'est abordé. Le moule est donc réalisé de manière telle que les parties de moule, représentées en 50, destinées à générer une déformation du tuyau, sont éloignées l'une de l'autre, en tout état de cause, d'une distance supérieure à celle séparant deux reliefs annulaires de l'embout (voir figures 5, 10 et 11). Ces parties de moule sont donc dans l'incapacité de permettre la suppression des espaces vides réalisés au voisinage des reliefs annulaires de l'embout.

Un but de la présente invention est donc de proposer un procédé et un dispositif de raccordement dont les conceptions permettent de supprimer les risques de fuite des fluides circulant dans les tuyaux, notamment lorsque ce fluide est sous pression, l'amélioration de l'étanchéité étant obtenue par augmentation de la pression de contact entre tuyau et embout à l'aide de moyens mécaniques, sans avoir à connaître les caractéristiques du processus d'injection de la matière surmoulée ou de la matière injectée.

Un autre but de la présente invention est de proposer un procédé et un dispositif de raccordement dont les conceptions permettent de combler au moins partiellement les espaces libres observés entre surface interne du tuyau et surface externe de l'embout lorsque l'embout possède des reliefs annulaires et de renforcer la pression de contact entre embout et tuyau au sommet de ces reliefs de manière à former des barrières d'étanchéité parfaitement sûres.

A cet effet, l'invention a pour objet un procédé de fabrication d'un dispositif de raccordement de tubes ou tuyaux sur un embout selon la revendication 1.

L'étirement ainsi réalisé améliore la pression de contact entre tuyau et embout et donc l'étanchéité. Il renforce parallèlement le maintien du tuyau sur l'embout. En outre, un tel procédé permet de limiter l'encombrement de la bague, en particulier son épaisseur.

Selon un mode de mise en oeuvre préféré du procédé, le moule est constitué de deux demi-coquilles comportant respectivement au moins une paire de saillies pour constituer les pièces d'appui lorsque le moule est fermé, lesdites saillies s'étendant, en position fermée du moule, de part et d'autre du relief annulaire et, de préférence, au voisinage de reliefs annulaires adjacents dit secondaires, ces saillies définissant entre elles, au droit du relief annulaire, une cavité de moulage annulaire dans laquelle est introduite la matière plastique à surmouler.

Le moule peut comporter autant de pièces que nécessaires en fonction de nombre de voies de l'embout.

Ainsi, lorsque le moule est fermé, les saillies exercent deux forces d'appui provoquant d'une part un étirement du tube ou tuyau de part et d'autre du point d'appui haut de l'embout et d'autre part une compression dudit tube ou tuyau contre l'embout. A l'issue du moulage, le tuyau est maintenu en compression contre l'embout dans les zones ayant subi une compression lors du moulage de manière à renforcer l'étanchéité de l'ensemble.

Il est à noter que la présence de reliefs annulaires secondaires au voisinage du relief annulaire principal au droit duquel la bague est surmoulée permet de créer de nouvelles barrières d'étanchéité immédiatement au voisinage des parties où le tuyau a été maintenu en appui contre la surface externe de l'embout. Il en résulte une nouvelle amélioration de l'étanchéité de l'ensemble.

L'invention a encore pour objet un dispositif de raccordement de tubes ou tuyaux sur un embout selon la revendication 3.

Ainsi, de manière avantageuse, la bague est uniquement surmoulée au droit du relief annulaire principal de l'embout de telle sorte qu'elle n'est en contact qu'avec le tube ou tuyau et non plus également avec l'embout comme cela était auparavant le cas. Le retrait de la bague ainsi surmoulée est homogène sur son ensemble et favorise donc le serrage du tube ou tuyau sur l'embout.

Le tube ou tuyau est étiré de part et d'autre du relief annulaire dit principal de l'embout de manière à venir en appui sur l'embout, de part et d'autre dudit relief, préalablement au surmoulage de la bague et ainsi combler au moins partiellement les espaces libres formés au voisinage des flancs du relief annulaire principal entre surface interne du tube et surface externe encore appelée creux de l'embout. Le fait d'utiliser les forces d'appui du moule pour combler au moins partiellement ces espace permet de garantir ce comblement.

De manière avantageuse, les valeurs de retenue à l'arrachement d'un dispositif de raccordement selon l'invention sont plus élevées que pour les dispositifs présentant un surmoulage selon l'état de la technique.

En outre, la bague surmoulée peut suivre facilement les mouvements éventuels du tuyau. Ce qui ne pouvait pas être le cas d'un surmoulage de l'état de la technique lié à l'embout. Par ailleurs, l'absence de liaison entre bague et embout permet une réduction des contraintes subies par la bague lors d'un déplacement relatif entre tuyau et bague. Parallèlement, l'étirement obtenu permet toutefois de limiter mécaniquement les déplacements relatifs entre tuyau et embout.

Les reliefs annulaires secondaires sont ménagés sur l'embout de part et d'autre du relief annulaire dit principal au droit duquel est surmoulée la bague. Ces reliefs annulaires secondaires présentent respectivement une hauteur inférieure au relief annulaire principal. Ces reliefs annulaires secondaires, de préférence de même hauteur, définissent entre eux une surface d'appui du tube ou tuyau à l'état emmanché sur l'embout. L'espace à combler sera à chaque fois formé dans l'intervalle entre relief annulaire principal et relief annulaire secondaire. Un appui optimal du moule sera positionné à chaque fois, dans cet intervalle, de préférence au voisinage du relief annulaire secondaire, lorsque l'espace à combler s'étend sur toute la longueur de l'intervalle pour former une barrière d'étanchéité supplémentaire.

Selon cette forme de réalisation, la pièce de retenue maintient le tube ou tuyau étiré de part et d'autre du relief annulaire principal, le tube ou tuyau étant également maintenu en appui contre l'embout entre les reliefs annulaires secondaires et le relief annulaire principal. On favorise à nouveau l'étanchéité du raccordement réalisé. De préférence, le relief annulaire principal, au droit duquel est surmoulée la bague, est réalisé sous forme d'une nervure de type sapin et est équidistant de chaque relief annulaire secondaire. Les deux reliefs annulaires secondaires peuvent être constitués d'une nervure de type sapin ou respectivement par une nervure de type sapin et une olive, l'olive exerçant une fonction de retenue du tuyau sur l'embout.

On décrira maintenant l'invention plus en détail en référence au dessin dans lequel :
la figure 1 représente une vue en coupe d'un dispositif de raccordement selon l'état de la technique
la figure 2 représente une vue en coupe d'un dispositif de raccordement selon l'invention ;
la figure 3 représente une vue en coupe d'un dispositif de raccordement placé dans un moule ouvert ; et
la figure 4 représente une vue en coupe d'un dispositif de raccordement placé dans un moule fermé.

Le dispositif de raccordement selon l'invention représenté à la figure 2 comporte un embout 1 à trois voies sur lequel sont emmanchés des tuyaux 2, une bague 3 étant surmoulée sur chaque tuyau 2.

L'embout 1 comporte sur chacune de ses voies un relief annulaire principal 4 sur lequel vient à recouvrement le tuyau 2 emmanché sur l'embout 1 et au droit duquel la bague 3 est surmoulée.

Des reliefs annulaires secondaires 5, 6 sont ménagés sur l'embout 1 de part et d'autre du relief annulaire principal 4.

Ces reliefs annulaires secondaires 5, 6 sont de préférence d'une même hauteur, inférieure à celle du relief annulaire principal 4, définissant entre eux une surface d'appui du tuyau 2 à l'état emmanché sur l'embout 1.

De préférence, le relief annulaire principal 4 est réalisé sous forme d'une nervure de type sapin et est équidistant de chaque relief annulaire secondaire 5, 6.

L'un des reliefs annulaires secondaires est constitué d'une nervure de type sapin 5 et l'autre d'une olive 6, empêchant l'arrachement.

De préférence, la nervure de type sapin 5 du relief annulaire secondaire est telle que connue dans l'état de la technique, c'est-à-dire sa pente favorisant l'emmanchement du tuyau 2 sur l'embout 1 alors que la nervure de type sapin constituant le relief annulaire principal 4 est du type inversé, c'est-à-dire que la nervure d'allure générale conique s'évase vers l'extrémité d'engagement du tuyau 2 sur l'embout 1, pour améliorer encore l'étanchéité.

De manière à réaliser le dispositif de raccordement selon l'invention, un embout 1 à deux voies sur lequel sont emmanchés deux tuyaux 2 à recouvrement des reliefs annulaires principaux 4 respectifs, est introduit dans un moule M constitué de deux demi-coquilles 7 qui en position fermée du moule M enserrent l'embout 1 et les deux tuyaux 2 au niveau de ce relief annulaire principal 4.

On note que, dans cette position, le tube ou tuyau 2 élastiquement déformable est emmanché sur l'embout 1 et délimite, au voisinage d'au moins l'un des flancs du relief annulaire principal 4 de l'embout 1, un espace libre E entre surface interne du tube et fond du creux de l'embout 1. Ce creux correspond à la surface externe de l'embout s'étendant entre un relief annulaire principal 4 et un relief annulaire secondaire 5, 6 lorsque ce relief annulaire secondaire 5, 6 est présent ou correspond à la surface externe de l'embout 1 jouxtant le relief annulaire principal 4 à partir duquel ce relief prend naissance.

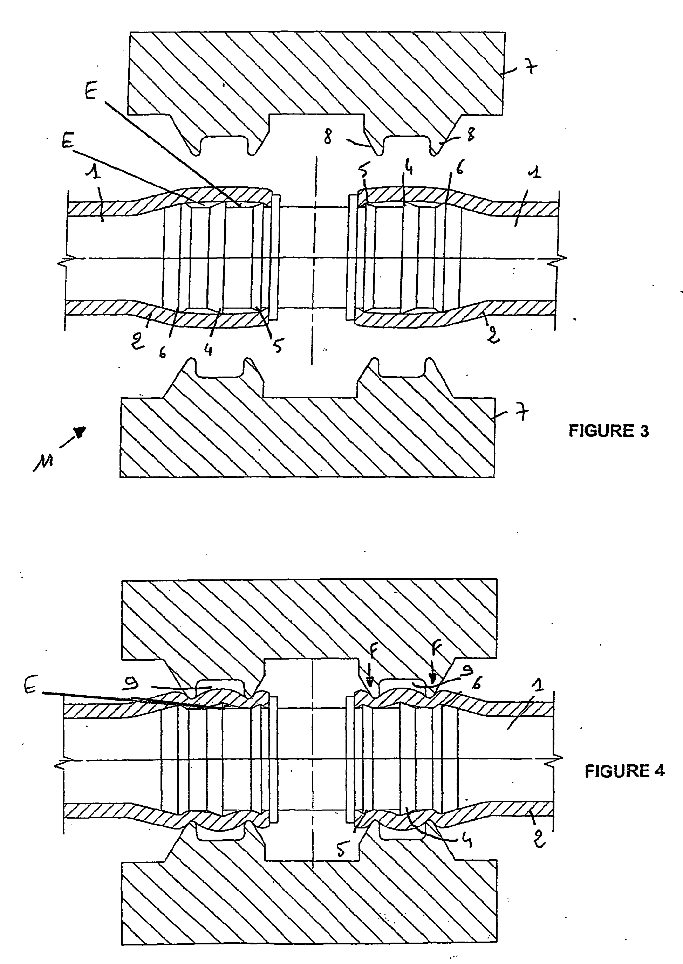

Après introduction du relief annulaire principal 4 de l'embout 1 recouvert par le tuyau 2 à l'intérieur de la cavité 9 de moulage, il est procédé à la déformation du tube ou tuyau 2 par l'intermédiaire de pièces 8 d'appui du moule apte à exercer des forces F d'appui sur le tube ou tuyau 2. Ce moule se présente sous forme de deux demi-coquilles 7 qui comportent chacune au moins une paire de saillies 8 qui, en position fermée du moule (figure 4), exercent respectivement une force F d'appui sur le tuyau 2 de part et d'autre du relief annulaire principal 4 et entre celui-ci et un relief annulaire secondaire 5 ou 6. Ces appuis 8 sont réalisés de manière telle qu'au moins l'un est disposé au droit de l'espace E libre entre surface interne du tube 2 et creux de l'embout. On provoque ainsi un étirement du tube ou tuyau 2 de part et d'autre du sommet du relief annulaire principal 4, en amenant ce tube ou tuyau 2 en appui sur l'embout 1 de part et d'autre de ce relief annulaire principal 4. On comble ainsi au moins partiellement l'espace E ménagé et on renforce l'étanchéité de l'ensemble. Lorsque le moule est fermé et que le tuyau est ainsi étiré, les saillies 8 délimitent entre elles, au droit du relief annulaire principal 4, une cavité 9 annulaire dans laquelle peut être introduite la matière plastique à surmouler pour former la bague 3. De préférence, la bague 3 est réalisée en polyamide 6.6, chargée ou non.

## Revendications

1. Procédé de fabrication d'un dispositif de raccordement de tubes ou tuyaux (2) sur un embout (1), l'embout (1) comportant au moins un, de préférence une pluralité de, reliefs annulaires (4) disposés à intervalles le long de la surface externe de l'embout (1) et définissant entre eux des creux, le tube ou tuyau (2) élastiquement déformable étant emmanché sur l'embout (1) et délimitant, au voisinage d'au moins l'un des flancs du relief annulaire de l'embout, un espace libre entre surface interne du tube et fond du creux ou de la surface externe de l'embout (1), ledit procédé comportant au moins une étape d'introduction de l'embout (1) sur lequel est emmanché au moins un tuyau (2) dans la cavité (9) de moulage d'un moule (M) de manière telle qu'au moins un relief annulaire de l'embout (1) recouvert par un tuyau (2) s'étende à l'intérieur de ladite cavité (9) de moulage, une étape de déformation du tube ou tuyau (2) par l'intermédiaire de pièces (8) d'appui du moule apte à exercer des forces d'appui (F) sur le tube ou tuyau (2) et une étape d'introduction de matière plastique dans la cavité (9) de moulage ménagée entre les pièces (8) d'appui du moule (M) et au droit du relief annulaire de l'embout (1) pour former par surmoulage une pièce, telle qu'une bague (3),
procédé **caractérisé en ce qu'**un seul relief annulaire de l'embout (1) étant disposé dans la cavité (9) de moulage, pour déformer le tube ou tuyau (2), on exerce, par l'intermédiaire des pièces (8) d'appui, une force d'appui (F) sur le tube ou tuyau (2) de part et d'autre dudit relief annulaire de l'embout (1), et **en ce qu'**on provoque par ces appuis (8), dont au moins l'un est disposé au droit de l'espace libre entre surface interne du tube (2) et creux ou surface externe de l'embout, l'étirement du tube ou tuyau (2) qui vient en appui sur l'embout (1) de part et d'autre dudit relief annulaire (4) en comblant au moins partiellement l'espace (E) ménagé de manière à renforcer l'étanchéité de l'ensemble.

2. Procédé de fabrication d'un dispositif de raccordement selon la revendication 1,
**caractérisé en ce que** le moule (M) est constitué de deux demi-coquilles (7) comportant respectivement au moins une paire de saillies (8) pour constituer les pièces d'appui lorsque le moule est fermé, lesdites saillies (8) s'étendant, en position fermée du moule, de part et d'autre du relief (4) annulaire et, de préférence, au voisinage de reliefs annulaires adjacents dit secondaires (5, 6), ces saillies (8) définissant entre elles, au droit du relief annulaire (4), une cavité (9) de moulage annulaire dans laquelle est introduite la matière plastique à surmouler.

3. Dispositif de raccordement de tubes ou tuyaux (2) sur un embout (1), l'embout (1) comportant au moins un, de préférence une pluralité de, reliefs annulaires (4) disposés à intervalle le long de la surface externe de l'embout (1) et définissant entre eux des creux, le tube ou tuyau (2) élastiquement déformable étant emmanché sur l'embout (1) et délimitant, au voisinage d'au moins l'un des flancs de chaque relief annulaire de l'embout, un espace libre entre surface interne du tube et fond du creux, une pièce de retenue telle qu'une bague (3) étant surmoulée sur le relief (4) annulaire du tube ou tuyau (2) au droit dudit relief annulaire (4) dit relief annulaire principal (4),
**caractérisé en ce que** la pièce (3) de retenue maintient, en appui sur l'embout (1) le tube ou tuyau (2) étiré de part et d'autre du relief annulaire principal (4) réalisé sous forme d'une nervure de type sapin, des reliefs annulaires secondaires (5, 6) étant ménagés sur l'embout (1) de part et d'autre du relief annulaire (4) dit principal au droit duquel est surmoulée la bague (3), ces reliefs annulaires secondaires (5, 6) présentant respectivement une hauteur inférieure au relief annulaire principal (4), lesdits reliefs annulaires secondaires (5, 6), de préférence de même-hauteur, définissant entre eux une surface d'appui du tube ou tuyau (2) à l'état emmanché sur l'embout (1).

4. Dispositif selon la revendication 3,
**caractérisé en ce que** les deux reliefs annulaires secondaires (5) sont constitués d'une nervure de type sapin.

5. Dispositif selon la revendication 3,
**caractérisé en ce que** les deux reliefs annulaires secondaires sont constitués respectivement par une nervure de type sapin (5) et une olive (6).

6. Dispositif selon l'une des revendications 3 à 5,
**caractérisé en ce que** le relief annulaire principal (4) de l'embout (1) est équidistant de chaque relief annulaire secondaire (5, 6).

## Patentansprüche

1. Verfahren zur Herstellung einer Vorrichtung zum Anschließen von Rohren oder Schläuchen (2) an ein Anschlussstück (1), wobei das Anschlussstück (1) mindestens eine, vorzugsweise eine Mehrzahl von ringförmigen Erhöhungen (4) aufweist, die in Abständen entlang der äußeren Oberfläche des Anschlussstücks (1) angeordnet sind und zwischeneinander Vertiefungen definieren, wobei das elastisch verformbare Rohr bzw. der elastisch verformbare Schlauch (2) auf das Anschlussstück(1) aufgesteckt ist und benachbart zu mindestens einer der Flanken der ringförmigen Erhöhung des Anschlussstücks einen freien Raum zwischen der inneren Oberfläche des Rohrs und dem Grund der Vertiefung oder der äußeren Oberfläche des Anschlussstücks (1) begrenzt, wobei das genannte Verfahren mindestens einen Schritt der Einführung des Anschlussstücks (1) in den Gießhohlraum (9) einer Form (M)umfasst, wobei an das Anschlussstück mindestens ein Rohr oder Schlauch (2) angesteckt ist, derart, dass mindestens eine von dem Rohr oder Schlauch (2) überdeckte ringförmige Erhöhung des Anschlussstücks (1) sich im Inneren des genannten Gießhohlraumes (9) erstreckt, einen Schritt der Verformung des Rohres oder Schlauches (2) durch Anlageteile (8), die geeignet ist, Anlagekräfte (F) auf das Rohr oder den Schlauch (2) auszuüben, und einen Schritt des Einbringens von Kunststoff in den Gießhohlraum (9), der zwischen den Anlageteilen (8) der Form (M) und rechtwinkelig zu der ringförmigen Erhöhung des Anschlussteiles (1) ausgebildet ist, um ein Teil, beispielsweise einen Ring (3), durch Anformen zu bilden, **dadurch gekennzeichnet, dass**, während eine einzige ringförmige Erhöhung des Anschlussteiles (1) in dem Gießhohlraum (9) angeordnet ist, eine Anlagekraft (F) über die Anlageteile (8) auf das Rohr oder den Schlauch (2) beidseitig der genannten ringförmigen Erhöhung des Anschlussteiles (1) ausgeübt wird, um das Rohr (2) oder den Schlauch zu verformen, und dass durch diese Anlageteile (8), von denen mindestens eines rechtwinkelig zu dem freien Raum zwischen der inneren Oberfläche des Rohres (2) und der Vertiefung oder der äußeren Oberfläche des Anschlussteiles angeordnet ist, das Strecken des Rohres oder Schlauches(2) bewirkt wird, das bzw. der sich an dem Anschlussteil (1) beidseitig der genannten ringförmigen Erhöhung (4) zur Anlage kommt und dabei den Raum (E) zumindest teilweise ausfüllt, um die Dichtigkeit des Anordnung zu erhöhen.

2. Verfahren zur Herstellung einer Vorrichtung zum Anschließen nach Anspruch 1, **dadurch gekennzeichnet, dass** die Form (M) durch zwei Halbschalen (7) gebildet ist, welche jeweils mindestens ein Paar Vorsprünge (8) aufweisen, um die Anlageteile zu bilden, wenn die Form geschlossen ist, wobei die genannten Vorsprünge (8) sich in der geschlossenen Stellung der Form beidseitig der ringförmigen Erhöhung (4) und bevorzugt benachbart zu angrenzenden ringförmigen Erhöhungen, die als Nebenerhöhungen (5, 6) bezeichnet werden, erstrecken, wobei diese Vorsprünge (8) untereinander rechtwinkelig zu der ringförmigen Erhöhung (4) einen ringförmigen Gießhohlraum(9) definieren, in den der anzuformende Kunststoff eingebracht wird.

3. Vorrichtung zum Anschließen von Rohren (2) oder Schläuchen an ein Anschlussstück (1), wobei das Anschlussstück (1) mindestens eine, vorzugsweise eine Mehrzahl von ringförmigen Erhöhungen (4) aufweist, welche in Abständen entlang der äußeren Oberfläche des Anschlussstücks(1) angeordnet sind und zwischeneinander Vertiefungen definieren, wobei das elastisch verformbare Rohr oder der elastisch verformbare Schlauch (2) an das Anschlussstück (1) angesteckt ist und benachbart zu mindestens einer der Flanken jeder ringförmigen Erhöhung des Anschlußstücks einen freien Raum zwischen der inneren Oberfläche des Rohres und dem Grund der Vertiefung begrenzt, wobei ein Rückhalteteil, beispielsweise ein Ring (3) an der ringförmigen Erhöhung (4) des Rohres oder Schlauches (2) rechtwinkelig zu der genannten ringförmigen Erhöhung (4), die als ringförmige Haupterhöhung (4) bezeichnet wird, angeformt ist,
**dadurch gekennzeichnet, dass** das Rückhalteteil (3) das Rohr oder den Schlauch (2) an dem Anschlussstück (1) abgestützt hält, das bzw. der beidseitig der ringförmigen Haupterhöhung (4) gestreckt ist, die in Form einer tannenförmigen Rippe ausgeführt ist, wobei ringförmige Nebenerhöhungen (5, 6) auf dem Anschlussstück (1) beidseitig der so genannten ringförmigen Haupterhöhung (4) ausgebildet sind, im rechten Winkel zu der der Ring (3) angeformt ist; wobei diese ringförmigen Nebenerhöhungen (5, 6) jeweils eine Höhe aufweisen, die geringer ist als die der ringförmigen Haupterhöhung (4), wobei die genannten, bevorzugt gleich hohen ringförmigen Nebenerhöhungen (5, 6) miteinander eine Abstützfläche des Rohrs (2) in dem an das Anschlussstück (1) aufgesteckten Zustand definieren.

4. Vorrichtung nach Anspruch 3, **dadurch gekennzeichnet, dass** die zwei ringförmigen Nebenerhöhungen (5) durch eine tannenförmige Rippe gebildet sind.

5. Vorrichtung nach Anspruch 3, **dadurch gekennzeichnet, dass** die zwei ringförmigen Nebenerhöhungen jeweils durch eine tannenförmige Rippe (5) und eine Olive (6) gebildet sind.

6. Vorrichtung nach einem der Ansprüche 3 bis 5, **dadurch gekennzeichnet, dass** die ringförmige Haupterhöhung (4) des Anschlussstücks (1) von jeder ringförmigen Nebenerhöhung (5, 6) gleich weit entfernt ist.

## Claims

1. Method of manufacturing a device for connecting tubes or pipes (2) to an endpiece (1), the endpiece (1) comprising at least one annular raised portion, preferably a plurality of raised portions (4) disposed at intervals along the external surface of the endpiece (1) and defining hollows therebetween, the resiliently deformable tube or pipe (2) being fitted onto the endpiece (1) and defining, in the vicinity of at least one of the sides of the annular raised portion of the endpiece, a free space between the internal surface of the tube and the base of the hollow or the external surface of the endpiece (1), said method including at least one step of introducing the endpiece (1), on which is fitted at least one pipe (2), into the moulding cavity (9) of a mould (M), in such a manner that at least one annular raised portion of the endpiece (1), covered by a pipe (2), extends to the interior of said moulding cavity (9), one step of deforming the tube or pipe (2) through the intermediary of pressure parts (8) of the mould, capable of exerting pressure forces (F) on the tube or pipe (2), and one step of introducing plastics material into the moulding cavity (9), provided between the pressure parts (8) of the mould (M) and at right angles to the annular raised portion of the endpiece (1), to form a part, such as a ring (3), by overmoulding, said method being **characterised in that**, since a single annular raised portion of the endpiece (1) is disposed in the moulding cavity (9), to deform the tube or pipe (2), a pressure force (F) is exerted, through the intermediary of the pressure parts (8), on the tube or pipe (2) on both sides of said annular raised portion of the endpiece (1), and **in that** the extrusion of the tube or pipe (2), which is supported on the endpiece (1) on both sides of said annular raised portion (4), is induced by these pressure parts (8), of which at least one is disposed at right angles to the free space between the internal surface of the tube (2) and the hollow or the external surface of the endpiece, by filling at least partially the space (E) provided so as to reinforce the watertightness of the assembly.

2. Method of manufacturing a connection device according to claim 1, **characterised in that** the mould (M) is made up of two half-shells (7), respectively comprising at least one pair of projections (8) to form the pressure parts when the mould is closed, said projections (8) extending, in the closed position of the mould, on both sides of the annular raised portion (4) and, preferably, in the vicinity of so-called secondary adjacent annular raised portions (5, 6), these projections (8) defining therebetween, at right angles to the annular raised portion (4), an annular moulding cavity (9), into which is introduced the plastics material to be overmoulded.

3. Device for connecting tubes or pipes (2) onto an endpiece (1), the endpiece (1) comprising at least one annular raised portion, preferably a plurality of raised portions (4) disposed at intervals along the external surface of the endpiece (1) and defining hollows therebetween, the resiliently deformable tube or pipe (2) being fitted onto the endpiece (1) and defining, in the vicinity of at least one of the sides of each annular raised portion of the endpiece, a free space between the internal surface of the tube and the base of the hollow, a retaining part such as a ring (3) being overmoulded on the annular raised portion (4) of the tube or pipe (2) at right angles to said annular raised portion (4), called the principal annular raised portion (4), **characterised in that** the retaining part (3) retains, pressed onto the endpiece (1), the tube or pipe (2) extruded on both sides of the principal annular raised portion (4) produced in the form of a firtree-type rib, secondary annular raised portions (5, 6) being provided on the endpiece (1) on both sides of the so-called principal annular raised portion (4), at right angles to which is overmoulded the ring (3), these secondary annular raised portions (5, 6) respectively having a height which is lower than the principal annular raised portion (4), said secondary annular raised portions (5, 6), preferably of the same height, defining therebetween a pressure surface of the tube or pipe (2) in the state when fitted on the endpiece (1).

4. Device according to claim 3, **characterised in that** the two secondary annular raised portions (5) are made up of a firtree-type rib.

5. Device according to claim 3, **characterised in that** the two secondary annular raised portions are made up respectively by a firtree-type rib (5) and an olive (6).

6. Device according to one of claims 3 to 5, **characterised in that** the principal annular raised portion (4) of the endpiece (1) is equidistant from each secondary annular raised portion (5, 6).
